(19) Europäisches Patentamt

European Patent Office

Office européen des brevets

(11) **EP 0 819 966 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(51) Int Cl.7: **G02B 27/18**, G02B 19/00, G02B 3/00, H04N 9/31, G02F 1/1335

(21) Anmeldenummer: **97201742.0**

(22) Anmeldetag: **09.06.1997**

(54) **Lichtprojektionsanordnung mit einem Linsenplattenintegrator**

Light projection device with lens array integrator

Projecteur à lumière avec intégrateur en forme de matrice de lentilles

(84) Benannte Vertragsstaaten:
**DE FR GB**

(30) Priorität: **22.06.1996 DE 19624991**

(43) Veröffentlichungstag der Anmeldung:
**21.01.1998 Patentblatt 1998/04**

(73) Patentinhaber:
• **Philips Corporate Intellectual Property GmbH**
  **20099 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder:
• **Derra, Günther, Dr., Philips Corporate**
  **20099 Hamburg (DE)**
• **Münch, Holger, Dr., Philips Corporate**
  **20099 Hamburg (DE)**

(74) Vertreter: **von Laue, Hanns-Ulrich, Dipl.-Ing. et al**
**Philips Corporate Intellectual Property GmbH,**
**Postfach 50 04 42**
**52088 Aachen (DE)**

(56) Entgegenhaltungen:
EP-A- 0 563 874          US-A- 4 769 750
US-A- 5 074 649          US-A- 5 251 067

• **DATABASE WPI Section PQ, Week 9733 Derwent Publications Ltd., London, GB; Class P81, AN 97-354531 XP002075897 & JP 09 146 061 A (MATSUSHITA DENKI SANGYO KK) , 6.Juni 1997**

**Beschreibung**

Die Erfindung betrifft eine Lichtprojektionsanordnung mit einer Lichtquelle und einem Linsenplattenintegrator, der eine im optischen Weg zwischen der Lichtquelle und einer Projektionsebene angeordnete, eine vorgebbare Anzahl von Linsenelementen aufweisende erste Linsenplatte und eine im optischen Weg zwischen der ersten Linsenplatte und der Projektionsebene angeordnete, eine vorgebbare Anzahl von Linsenelementen aufweisende zweite Linsenplatte aufweist, wobei das Licht der Lichtquelle mittels der Linsenelemente der ersten Linsenplatte auf den Linsenelementen der ersten Linsenplatte jeweils zugeordnete Linsenelemente der zweiten Linsenplatte abgebildet wird und wobei eine Überlagerung der Lichtbündel der Linsenelemente der zweiten Linsenplatte auf der Projektionsebene mittels einer prismatischen Anordnung der Linsenelemente der zweiten Linsenplatte oder einer Kondensorlinse erzielt wird.

Bei derartigen Lichtprojektionsanordnungen wird mittels des Linsenplattenintegrators, der wenigstens zwei Linsenplatten mit jeweils einer vorgebbaren Anzahl von Linsenelementen aufweist, eine sehr gleichmäßige Beleuchtung einer Projektionsfläche in der Projektionsebene erreicht. Dies bedeutet, daß auf der Projektionsfläche die Intensitätsverteilung des Lichtes sehr homogen ist, d.h. insbesondere die Lichtverteilung im Mittenbereich und in den Randbereichen der Projektionsfläche etwa gleich ist. Derartige Lichtprojektionsanordnungen mit einem Linsenplattenintegrator haben darüber hinaus die Vorteile, daß die Lichtverteilung auf der Projektionsebene bzw. der Projektionsfläche sehr unempfindlich gegen geringfügige Variationen der Position der Lichtquelle ist. Ferner ist die Anordnung unempfindlich gegen mechanische Toleranzen des gesamten Systems. Ferner ist es unempfindlich gegen Inhomogenitäten der Lichtquelle selbst, die beispielsweise durch Fehler im Reflektor, durch einen ektrischen Rückführdraht etc. entstehen kann. Auch wird die Projektionsfläche farblich homogen beleuchtet.

Eine derartige Lichtprojektionsanordnung ist beispielsweise aus dem US-Patent 5,418,583 bekannt. Bei dieser Anordnung weist die zweite Linsenplatte des Linsenplattenintegrators darüber hinaus Linsenelemente verschiedener Größe auf. Dabei sind die am Rand der zweiten Linsenplatte angeordneten Linsenelemente etwas kleiner gehalten als die im Mittenbereich angeordneten, um die unterschiedlich große Abbildung der Lichtquelle auf die Linsenelemente der zweiten Linsenplatte zu berücksichtigen. In jedem Falle ist auch hier das Ziel gegeben, daß jedes Lichtbündel, das durch die Linsenelemente der zweiten Linsenplatte geführt wird, möglichst gleichmäßig auf die Projektionsebene abgebildet wird und auf dieser eine Projektionsfläche jeweils voll ausfüllt.

Es ist Aufgabe der Erfindung, die Lichtprojektionsanordnung der eingangs genannten Art dahingehend weiterzuentwickeln, daß unter Beibehaltung der übrigen Vorzüge von Lichtanordnungen mit Linsenplattenintegratoren die Möglichkeit besteht, eine im Mittenbereich der Projektionsfläche höhere Lichtintensität als an deren Randbereich vorzusehen.

Diese Aufgabe ist erfindungsgemäß dadurch gelöst, daß eine erste Gruppe von Linsenelementen der ersten Linsenplatte und eine erste Gruppe von diesen jeweils zugeordneten Linsenelementen der zweiten Linsenplatte vorgesehen sind, wobei die durch die Linsenelemente der ersten Gruppen geführten Lichtbündel auf eine Projektionsfläche in der Projektionsebene fokussiert sind und diese jeweils ausleuchten, und daß eine zweite Gruppe von Linsenelementen der ersten Linsenplatte und eine zweite Gruppe von diesen jeweils zugeordneten Linsenlementen der zweiten Linsenplatte vorgesehen sind, wobei die durch die Linsenelemente der zweiten Gruppen geführten Lichtbündel auf eine Ebene vor oder hinter der Projektionsebene fokussiert sind und jeweils nur eine Teilfläche der Projektionsfläche beleuchten.

Sowohl auf der ersten Linsenplatte wie auch auf der zweiten Linsenplatte ist eine erste Gruppe von Linsenelementen vorgesehen. Jedem Linsenelement der ersten Gruppe, das auf der ersten Platte vorgesehen ist, ist auf der zweiten Platte ein Linsenelement zugeordnet, daß ebenfalls zur ersten Gruppe der auf dieser Linsenplatte angeordneten Linsenelemente gehört. Die Lichtquelle wird von den Linsenelementen der ersten Gruppe der ersten Linsenplatte auf die Linsenelemente der ersten Gruppe der zweiten Linsenplatte abgebildet. Die durch diese Linsenelemente der ersten Gruppe der zweiten Linsenplatte geführten Lichtbündel werden mittels einer prismatischen Anordnung dieser Lichtelemente oder mittels einer Kondensorlinse auf der Projektionsfläche in der Projektionsebene überlagert. Dabei sind die Linsenelemente der ersten Gruppe der ersten Linsenplatte und der ersten Gruppe der zweiten Linsenplatte sowie die übrige Optik so ausgestaltet, daß die Lichtbündel auf die Projektionsfläche fokussiert sind, ist besonders daran erkennbar, daß deren Ränder in der Projektionsebene scharf abgebildet werden. Dies bedeutet also, daß die Lichtbündel auf der Projektionsfläche jeweils gleiche Größe haben, die Projektionsfläche jeweils voll ausleuchten und sich vollständig überlagern.

Darüber hinaus sind sowohl auf der ersten Linsenplatte wie auch auf der zweiten Linsenplatte Linsenelemente vorgesehen, die zu einer zweiten Gruppe gehören. Auch diese sind jeweils einzeln einander zugeordnet und führen jeweils Lichtbündel, die Licht auf die Projektionsfläche werfen. Für die Lichtbündel, die durch die Linsenelemente der zweiten Gruppen geführt werden, ist jedoch vorgesehen, daß diese nicht auf die Projektionsebene fokussiert sind. Sie sind vielmehr auf eine Ebene vor oder hinter der Projektionsebene fokussiert. Dies bedeutet, daß die Lichtbündel auf der Projektionsebene unscharf abgebildet werden. Diese unscharfe Abbildung der Lichtbündel in der Projektionsebene ist besonders daran erkennbar, daß die Berandungen der Lichtbündel in der Projektionsebene unscharf abgebildet werden. Darüber hinaus ist die Anordnung so ausgelegt, daß die Lichtbündel, die durch Linsenelemente geführt werden, die zu den zweiten Gruppen gehören, in der Projektionsebene nur jeweils eine Teilfläche der Projektionsfläche beleuchten.

Damit besteht die Möglichkeit, beispielsweise den Mittenbereich intensiver zu beleuchten als Randbereiche. Darüber hinaus ist auch eine beliebige Intensitätsverteilung auf der Projektionsfläche erzielbar.

Durch die unscharfe Abbildung der durch die zweiten Gruppen der Linsenelemente geführten Lichtbündel werden die Ränder der Lichtbündel auf der Projektionsfläche ebenfalls unscharf abgebildet, so daß die Ränder visuell nicht auffallen. Dies ist wichtig, da diese Lichtbündel jeweils nur Teilbereiche beleuchten und anderenfalls deren Ränder erkennbar wären.

Mittels dieser Anordnung besteht die Möglichkeit, durch Wahl der Anzahl und Ausgestaltung der Linsenelemente der zweiten Gruppen auf der ersten und der zweiten Linsenplatte eine gewünschte Intensitätsverteilung auf dem Display vorzunehmen. Die übrigen Vorteile derartiger Anordnungen, nämlich die farblich homogene Beleuchtung, die von Inhomogenitäten der Lichtquelle unabhängige Lichtverteilung und die gegen Instabilitäten der Position der Lichtquelle unempfindliche Lichtverteilung bleiben erhalten.

Gemäß einer Ausgestaltung dieser Erfindung ist vorgesehen, daß die Teilfläche, die durch Lichtbündel beleuchtet wird, die durch die zweiten Gruppen der Linsenelemente der ersten und der zweiten Linsenplatte geführt werden, in einem Mittenbereich der Projektionsfläche angeordnet ist.

Die Anordnung kann vorteilhaft so ausgestaltet sein, daß die durch die zweiten Gruppen der Linsenelemente geführten Lichtbündel vorzugsweise einen in der Mitte der Projektionsfläche angeordneten Teilbereich beleuchten. Damit wird in diesem Bereich eine hohe Intensität der Beleuchtung erzielt. Dies ist oft wünschenswert, da die in der Mitte der Projektionsfläche erreichte Intensität ein wichtiges Kriterium beim Verkauf derartiger Anordnungen ist. Im übrigen fällt eine zum Rand der Projektionsfläche hin abfallende Intensität oftmals deshalb nicht sehr auf, da ggf. beispielsweise eine Videovorführung, zu der derartige Lichtprojektionsanordnungen eingesetzt werden können, in dunklen Umgebungen stattfindet, so daß ohnehin im Randbereich zu dem dunklen Raum hin ein gewisser Abfall an Lichtintensität zugelassen werden kann und ggf. sogar wünschenswert ist.

Eine weitere Ausgestaltung der Erfindung ist dadurch gekennzeichnet, daß die Linsenelemente der zweiten Gruppen das gleiche Seiten-/Höhenverhältnis wie die Projektionsfläche aufweisen.

Durch diese Maßnahme wird erreicht, daß die Teilflächen, die jeweils durch Lichtbündel beleuchtet werden, die durch Linsenelemente der zweiten Gruppen auf der ersten und der zweiten Linsenplatte geführt werden, auf der Projektionsfläche das gleiche Seiten-/Höhenverhältnis wie diese aufweist. Damit wird ein zu allen Seiten hin gleichmäßiger Lichtintensitätsabfall beispielsweise zu den Rändern hin erreicht. Bei gleichem Seiten-/Höhenverhältnis der beleuchteten Teilflächen fallen diese optisch nicht so sehr auf.

Für eine weitere Ausgestaltung der Erfindung ist vorgesehen, daß die zu der zweiten Gruppe gehörenden Linsenelemente der ersten Linsenplatte kleiner ausgeführt sind als die zu der ersten Gruppe gehörenden Linsenelemente der ersten Linsenplatte.

Die kleinere Ausgestaltung der zu der zweiten Gruppe gehörenden Linsenelemente auf der ersten Linsenplatte als der zu der ersten Gruppe gehörenden Linsenelemente auf dieser Linsenplatte ist eine einfache Möglichkeit, die gewünschte Wirkung zu erzielen, daß die durch die zweiten Gruppen der Linsenelemente geführten Lichtbündel auf der Projektionsfläche kleiner abgebildet werden als die durch die ersten Gruppen der Linsenelemente geführten Lichtbündel. Die darüber hinaus erforderliche Defokussierung der durch die zweiten Gruppen geführten Lichtbündel muß durch darüber hinaus gehende Maßnahmen beispielsweise durch Ausgestaltung der entsprechenden zugeordneten Linsenelemente der zweiten Gruppe auf der zweiten Linsenplatte oder durch eine entsprechende Ausgestaltung einer Kondensorlinse erzielt werden.

Gemäß einer weiteren Ausgestaltung der Erfindung ist vorgesehen, daß wenigstens einige der Linsenelemente der zweiten Gruppe der ersten Linsenplatte an deren äußerem Bereich angeordnet sind.

Die Linsenelemente der zweiten Gruppe der ersten Linsenplatte werden deshalb vorzugsweise an deren äußeren Bereich angeordnet, weil in diesem Bereich ohnehin die Lichtintensität der Lichtquelle geringer ist. Damit kann die höhere Intensität im Mittenbereich für die durch die ersten Gruppen der Linsenelemente geführten Lichtbündel genutzt werden, die die Projektionsfläche vollständig ausleuchten. Die durch die zweiten Gruppen der Linsenelemente geführten Lichtbündel, die nur Teilflächen beleuchten, können eine geringere Intensität haben, so daß vorteilhaft die Linsenelemente auf der ersten Linsenplatte, die zu dieser Gruppe gehören, an deren Randbereich angeordnet werden.

Gemäß einer weiteren Ausgestaltung der Erfindung ist vorgesehen, daß die zu der ersten Gruppe gehörenden Linsenelemente der ersten Linsenplatte und die ihnen zugeordneten Linsenelemente der zweiten Linsenplatte einen anderen Abstand zueinander aufweisen als die zu der zweiten Gruppe gehörenden Linsenelemente der ersten Linsenplatte und die ihnen zugeordneten Linsenelemente der zweiten Linsenplatte.

Bei einer derartigen Anordnung können vorteilhaft die zu der ersten Gruppe gehörenden Linsenelemente auf der ersten und der zweiten Linsenplatte so angeordnet sein, daß sie scharf auf die Projektionsebene abgebildet werdne und die Projektionsfläche in der Projektionsebene vollständig ausleuchten. Die zu den zweiten Gruppen gehörenden Linsenelemente auf beiden Linsenplatten weisen jedoch einen anderen Abstand zueinander auf, der sowohl die Folge hat, daß die durch diese Linsenelemente geführten Lichtbündel die Projektionsfläche in der Projektionsebene nicht vollständig ausleuchten, als auch daß die Lichtbündel in der Projektionsebene nicht fokussiert sind, da sie durch den differierenden Abstand der Linsenelemente zueinander eine Fokussierung der durch sie geführten Lichtbündel auf eine Ebene vor oder hinter der Projektionsebene zur Folge hat. Somit werden durch diese differierenden Abstände der Linsenelemente der beiden Gruppen zueinander beide gewünschten Effekte erzielt.

Eine weitere Möglichkeit, diese Effekte zu erzielen, besteht gemäß einer weiteren Ausgestaltung der Erfindung darin, daß im im Strahlengang zwischen der zweiten Linsenplatte und der Projektionsebene eine Korrekturlinse angeordnet ist, durch welche der Maßstab der durch sie fallenden Strahlenbündel, die aus zu den ersten Gruppen gehörenden Linsenlementen stammen, so verändert wird, daß diese auf die Projektionsebene fokussiert sind und diese jeweils vollständig ausleuchten, und daß die nicht die Korrekturlinse passierenden Lichtbündel aus Linsenelementen der zweiten Gruppen auf eine Ebene vor oder hinter der Projektionsbene fokussiert sind und diese jeweils nur teilweise beleuchten.

Eine derartige Korrekturlinse kann vorteilhaft im Mittenbereich des Strahlengangs angeordnet sein. Daher ist die Anordnung so ausgelegt, daß diejenigen Lichtbündel, die vorzugsweise durch im Mittenbereich der Linsenelemente angeordnete Linsenelemente der ersten Gruppen geführt werden, durch diese Korrekturlinse fallen. Die Anordnung ist dann so ausgelegt, daß diese Lichtbündel, die durch die Korrekturlinse fallen, auf der Projektionsfläche scharf abgebildet werden. Die durch Linsenelemente der zweiten Gruppen geführten Lichtbündel werden durch die Korrekturlinse hingegen nicht beeinflußt und werden daher unscharf auf die Projektionsebene abgebildet und leuchten diese nicht vollständig aus.

Es besteht grundsätzlich auch die Möglichkeit, umgekehrt vorzugehen, also die durch die zweiten Gruppen der Linsenelemente geführten Lichtbündel durch die Korrekturlinse zu führen und die Anordnung so auszulegen, daß diese Lichtbündel unscharf auf die Projektionsebene abgebildet werden und nur einen Teil der Projektionsfläche beleuchten.

Gemäß einer weiteren Ausgestaltung der Erfindung ist vorgesehen, daß ein polarisierender Strahlenteiler im Strahlengang vorgesehen ist, welcher verschieden lange optische Wege für in verschieden Polarisationsebenen auf ihn treffende Lichtstrahlen aufweist, und daß der Strahlenteiler das auf ihn treffende Licht in Lichtbündel, die auf auf der zweiten Linsenplatte vorgesehene Linsenelemente der ersten Gruppe geführt werden, und in Lichtbündel, die auf auf der zweiten Linsenplatte vorgesehene Linsenelemente der zweiten Gruppe geführt werden, aufteilt.

Ein derartiger polarisierender Strahlenteiler führt auf ihn treffende Lichtstrahlen mit unterschiedlichen optischen Wegen innerhalb des Strahlenteilers. Das Kriterium hierbei ist die Polarisationsrichtung der Lichtbündel. Damit wird erreicht, daß Licht in Abhängigkeit der Polarisationsrichtung mit unterschiedlich langen Wegen in dem Strahlenteiler geführt wird. Erfindungsgemäß kann ein derartiger Strahlenteiler vorteilhaft dazu eingesetzt werden, daß auf ihn treffende Licht mit variierender Polarisationsebene in zwei große Strahlenbündel aufzuteilen. Das eine Strahlenbündel wird auf Linsenelemente der ersten Gruppen und das andere Strahlenbündel auf Linsenelemente der zweiten Gruppen geführt. Durch entsprechende Anordnung des polarisierenden Strahlenteilers im Strahlengang kann damit erreicht werden, daß für die Strahlenbündel der ersten Gruppen andere optische Verhältnisse entstehen als für durch Linsenelemente der zweiten Gruppen ge-führte Strahlenbündel. Diese unterschiedlichen opti-schen Verhältnisse können dazu eingesetzt werden, durch Linsenelemente der ersten Gruppen geführten Lichtbündel scharf auf der Projektionsfläche zu fokussieren und diese vollständig auszuleuchten, hingegen die durch Linsenelemente der zweiten Gruppen in der Projektionsebene unscharf und nur auf eine Teilfläche der Projektionsfläche abzubilden.

Für alle diese möglichen Varianten ist gemäß einer weiteren Ausgestaltung der Erfindung vorgesehen, daß etwa 20 bis 50 % der Linsenelemente der Linsenplatten jeweils der zweiten Gruppe angehören.

Eine derartige Lichtprojektionsanordnung kann, wie gemäß einer weiteren Ausgestaltung der Erfindung vorgesehen ist, vorteilhaft für einen Videoprojektor eingesetzt werden. Dieser ist dadurch gekennzeichnet, daß die Projektionsebene als LCD-Element ausgebildet ist, das in Abhängigkeit eines Bildsignals angesteuert wird, und daß im Strahlengang hinter dem LCD-Element wenigstens ein Projektionsobjektiv vorgesehen ist. Insbesondere für derartige Videoprojektoren können die Eigenschaften der erfindungsgemäßen Anordnung genutzt werden, da der Videoprojektor auf diese Weise auf der Projektionsfläche eine hohe Mittenlichtintensität erzielen kann.

Nachfolgend werden anhand der Zeichnung einige Ausführungsbeispiele der Erfindung näher erläutert. Es zeigen:

Fig. 1 eine schematische Darstellung einer Licht-projektionsanordnung mit einem Linsenplatteninte-grator,

Fig. 2 eine schematische Darstellung einer Projektionsfläche der Anordnung gemäß Fig. 1,

Fig. 3 eine erste Linsenplatte einer ersten Ausführungsform der erfindungsgemäßen Lichtprojektionsanordnung,

Fig. 4 eine erste und eine zweite Linsenplatte einer zweiten Ausführungsform,

Fig. 5 eine schematische Darstellung einer erfindungsgemäßen Lichtprojektionsanordnung einer dritten Ausführungsform,

Fig. 6 eine schematische Darstellung einer vierten Ausführungsform der Lichtprojektionsanordnung und

Fig. 7 eine schematische Darstellung eines Videoprojektors mit der erfmdungsgemäßen Lichtprojektionsanordnung.

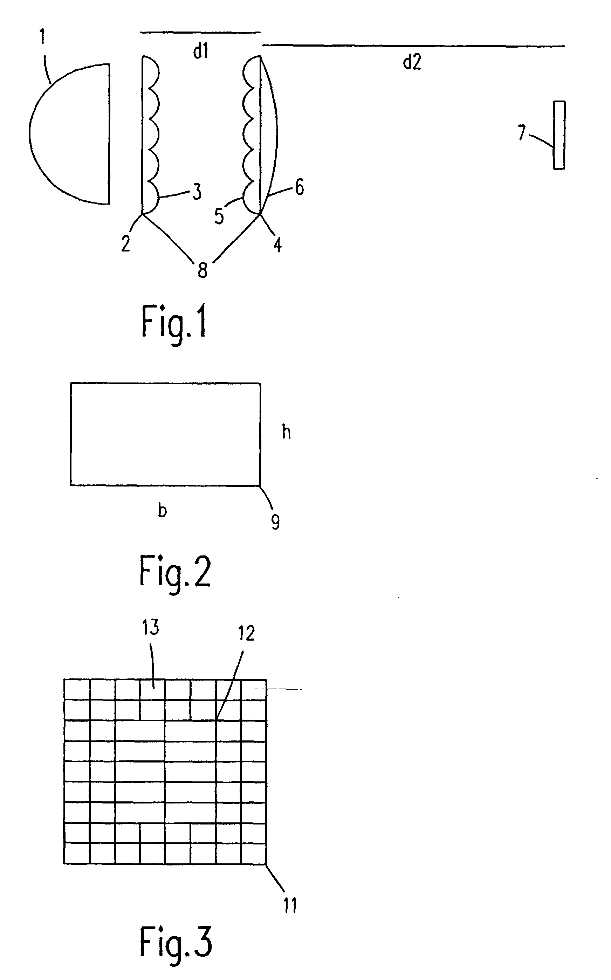

Fig. 1 zeigt eine schematische Darstellung einer Lichtprojektionsanordnung mit einem Linsenplattenintegrator.

Die Anordnung weist eine Lichtquelle 1 auf, deren Licht auf eine erste Linsenplatte 2 fällt, welche einzelne Linsenelemente 3 aufweist. Im Strahlengang hinter der ersten Linsenplatte 2 ist eine zweite Linsenplatte 4 vorgesehen, welche Linsenelemente 5 aufweist. Bei der zweiten Linsenplatte 4 ist eine Kondensorlinse 6 vorgesehen. Im Strahlengang hinter der zweiten Linsenplatte 4 ist eine Projektionsebene 7 angedeutet.

Die erste Linsenplatte 2 und die zweite Linsenplatte 4 bilden gemeinsam einen Linsenplattenintegrator 8.

Das von der Lichtquelle 1 stammende Licht wird mittels der auf der ersten Linsenplatte 2 angeordneten Linsenelemente 3 auf jeweils zugeordnete Linsenelemente 5 der zweiten Linsenplatte 4 abgebildet. Dabei ist im allgemeinen jedem Linsenelement 3 der ersten Linsenplatte 2 genau ein Linsenelement 5 der zweiten Linsenplatte 4 zugeordnet. Die dann durch die Linsenelemente 5 der zweiten Linsenplatte 4 geführten Lichtbündel werden entweder mittels einer in der Figur nicht dargestellten prismatischen Anordnung der Linsenelemente 5 der zweiten Linsenplatte 4 oder mittels einer in der Fig. 1 angedeuteten Kondensorlinse 6 gebündelt und überlagern sich in der Projektionsebene 7.

Dabei gilt die Abbildungsgleichung

$$1/f = 1/d_1 + 1/d_2.$$

Darin ist f die Gesamtbrennweite der Linsenelemente 5 der zweiten Linsenplatte 4 und der Kondensorlinse 6. $d_1$ ist der Abstand der beiden Linsenplatten zueinander und $d_2$ der Abstand der zweiten Linsenplatte 4 mit der Kondensorlinse 6 zu der Projektionsebene 7.

Sofern diese Abbildungsvorschrift erfüllt ist, werden die durch den Linsenplattenintegrator geführten Lichtbündel auf der Projektionsebene 7 scharf abgebildet. Bei entsprechender Ausbildung der Anordnung wird jeweils eine Projektionsfläche voll beleuchtet.

Eine derartige Projektionsfläche 9 wie sie in der Projektionsebene 7 der Anordnung gemäß Fig. 1 angeordnet sein kann, ist beispielhaft in Fig. 2 dargestellt. Die Projektionsfläche 9 weist eine Breite b und eine Höhe h auf, die bei Lichtprojektionsanordnungen nach dem Stand der Technik durch entsprechend ausgelegte Linsenplattenintegratoren durch alle durch die einzelnen Linsenelemente geführten Lichtbündel vollständig ausgeleuchtet wird, wobei die Lichtbündel auf die in der Projektionsebene 7 angeordnete Projektionsfläche 9 fokussiert sind. Die Linsenplattenelemente auf der ersten Linsenplatte haben das gleiche Verhältnis von Breite zu Höhe, wie die Projektionsfläche.

Die Erfindung sieht nun vor, diese optischen Verhältnisse nur noch für einen Teil von Linsenelementen vorzusehen. So ist eine erste Gruppe von Linsenelementen vorgesehen, für die diese erläuterten Verhältnisse gelten. Es ist jedoch auf beiden Linsenplatten eine zweite Gruppe von Linsenelementen vorgesehen, die die durch sie geführten Lichtbündel nicht auf die Projektionsebene 7 fokussiert und die die Projektionsfläche 9 jeweils nur teilweise ausleuchten. Es werden nachfolgend vier Ausführungsformen dieser erfindungsgemäßen Lichtprojektionsanordnung anhand der Fig. 3 bis 6 näher erläutert.

Fig. 3 zeigt eine erste Linsenplatte 11, wie sie für eine erste Ausführungsform der erfindungsgemäßen Lichtprojektionsanordnung vorgesehen sein kann. Die Anordnung ähnelt grundsätzlich derjenigen gemäß Fig. 1, jedoch ist anstelle der dort vorgesehenen ersten Linsenplatte 2 die Linsenplatte 11 entsprechend der Darstellung gemäß Fig. 3 vorgesehen.

In einem Mittenbereich der Linsenplatte 11 gemäß Fig. 3 sind Linsenelemente 12 vorgesehen, die ein größeres Format aufweisen, als in einem Randbereich angeordnete Linsenelemente 13.

Die in dem Mittenbereich angeordneten größeren Linsenelemente 12 gehören zu der ersten Gruppe der Linsenelemente. Mittels dieser Linsenelemente und entsprechenden Linsenelementen der ersten Gruppe auf der zweiten, in der Figur nicht dargestellten Linsenplatte werden Lichtbündel geführt, die auf die Projektionsebene fokussiert sind und diese jeweils vollständig ausleuchten. In einem besonders einfachen Falle kann die zweite Linsenplatte identisch zur ersten ausgeführt sein.

Mittels der am Randbereich der ersten Linsenplatte 11 angeordneten Linsenelemente 13, die zu einer zweiten Gruppe gehören, und ihnen zugeordneter Linsenelemente einer zweiten Gruppe auf einer zweiten Linsenplatte werden Lichtbündel geführt, die jeweils nur Teilbereiche beispielsweise der Projektionsfläche 9 gemäß Fig. 2 ausleuchten. Übertragen auf die Anordnung gemäß Fig. 1 bedeutet dies auch, daß die Lichtbündel nicht auf die Projektionsebene 7 fokussiert sind. Sie sind vielmehr auf eine Ebene vor oder hinter dieser Ebene 7 fokussiert, so daß die Lichtbündel auf der Projektionsebene 7 bzw. der in ihr angeordneten Projektionsfläche 9 gemäß Fig. 2 unscharf abgebildet werden.

Dabei kann die Anordnung beispielsweise so ausgelegt sein, daß die durch die Lichtelemente 13 der ersten Linsenplatte 11 und die jeweils zugeordneten Linsenelemente der zweiten Gruppe der zweiten Linsenplatte vorzugsweise auf einen Mittenbereich der Projektionsebene 9 gemäß Fig. 2 abgebildet werden. Damit wird in dem Mittenbereich eine höhere Lichtintensität erzielt.

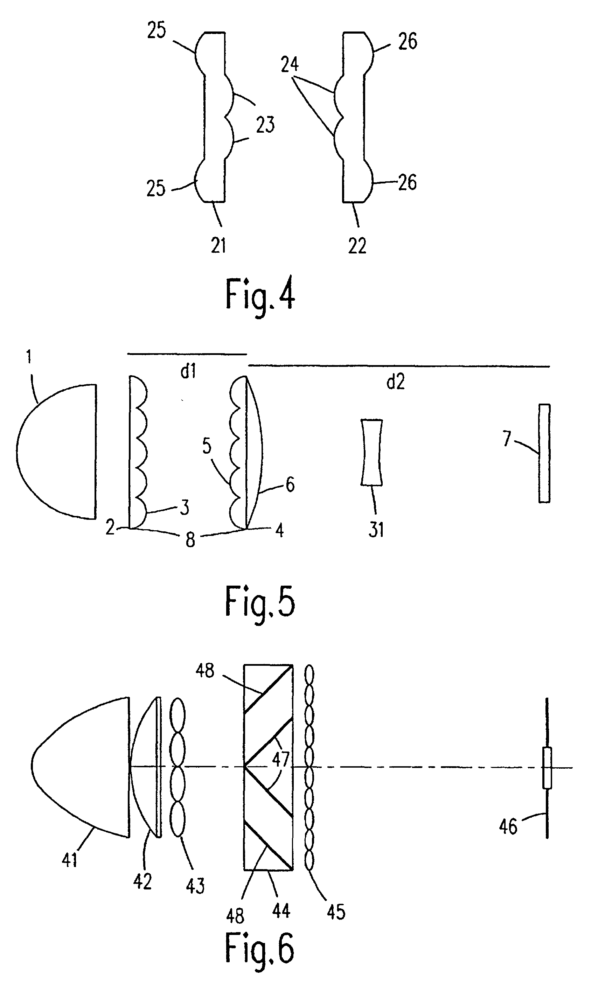

In Fig. 4 sind eine erste Linsenplatte 21 und eine zweite Linsenplatte 22 dargestellt, wie sie beispielsweise in der Anordnung gemäß Fig. 1 anstelle der dort dargestellten Linsenplatten 2 und 4 eingesetzt werden können. Bei dieser zweiten Ausführungsform der Erfindung werden die Linsenplatten 21 und 22 so ausgebildet, daß die Linsenelemente der beiden Gruppen unterschiedlichen Abstand zueinander haben.

Im Mittenbereich der ersten Linsenplatte 21 sind zu der ersten Gruppe gehörende Linsenelemente 23 vorgesehen. Auf der zweiten Linsenplatte 22 sind diesen ersten Linsenelementen 23 der ersten Linsenplatte 21 zugeordnete erste Linsenelemente 24 der zweiten Linsenplatte 22 vorgesehen.

Am Randbereich der ersten Linsenplatte 21 sind zu einer zweiten Gruppe gehörende Linsenelemente 25 angeordnet. Die zweite Linsenplatte 22 weist ebenfalls zu der zweiten Gruppe gehörende Linsenelemente 26 auf, die ebenfalls an deren Randbereich angeordnet sind.

Sieht man anstelle der in der Fig. 1 dargestellten ersten Linsenplatte 2 eine Linsenplatte 21 gemäß Fig. 4 und anstelle der in Fig. 1 dargestellten zweiten Linsenplatte 4 eine Linsenplatte 22 gemäß Fig. 4 vor, so wird durch die unterschiedlichen Abstände der Linsenplatten der beiden Gruppen zueinander eine unterschiedlich optische Wirkung erzielt, die dazu eingesetzt werden kann, die Lichtbündel in verschiedener Größe und verschiedener Fokussierung auf die Projektionsebene abzubilden.

Die Darstellung gemäß Fig. 4 zeigt, daß die Linsenelemente der ersten Gruppen, nämlich die Linsenelemente 23 auf der ersten Linsenplatte 21 und die Linsenelemente 24 auf der zweiten Linsenplatte 22 zueinander einen deutlich geringeren Abstand aufweisen, als die zu den zweiten Gruppen gehörenden Linsenelemente 25 der ersten Linsenplatte 21 und die Linsenelemente 26 der zweiten Linsenplatte 22 zueinander.

Dabei kann die Gesamtanordnung vorteilhaft so ausgelegt sein, daß die durch die ersten Linsenelemente 23 und 24 der beiden Linsenplatten 21 und 22 geführten Lichtbündel auf die Projektionsebene 7 entsprechend der Darstellung gemäß Fig. 1 scharf abgebildet werden und eine in dieser entsprechend Fig. 2 vorgesehene Projektionsfläche 9 jeweils vollständig ausleuchten. Durch die größeren Abstände der ersten Linsenelemente 25 auf der Linsenplatte 21 zu den auf der Linsenplatte 22 vorgesehenen Linsenelementen 26 wird jedoch der Effekt erzielt, daß die durch diese Linsenelemente geführten Lichtbündel entsprechend der Darstellung gemäß Fig. 1 auf der Projektionsebene 7 unscharf abgebildet werden. Es wird dann entsprechend der Darstellung gemäß Fig. 2 die Projektionsfläche 9 nur teilweise ausgeleuchtet. Auch hier kann vorteilhaft vorzugsweise eine Beleuchtung des Mittenbereichs durch die durch die Linsenelemente 25 und 26 geführten Lichtbündel vorgenommen werden.

Fig. 5 zeigt eine dritte Ausführungsform der erfindungsgemäßen Lichtprojektionsanordnung.

Die Anordnung gemäß Fig. 5 entspricht weitgehend der Anordnung gemäß Fig. 1, jedoch ist im Strahlengang zwischen der zweiten Linsenplatte 4 und der Projektionsebene 7 eine Korrekturlinse 31 vorgesehen. Die Korrekturlinse 31 ist dabei so ausgestaltet und so angeordnet, daß durch sie diejenigen Lichtbündel geführt werden, die durch Linsenelemente der ersten Gruppen auf den beiden Linsenplatten 2 und 4 vorgesehenen Linsenelemente geführt werden. Diese in der Fig. 5 nicht näher angedeuteten Linsenelemente der ersten Gruppe sind zusammen mit der Kondensorlinse 6 und der Korrekturlinse 31 so ausgestaltet, daß die durch diese Elemente fallenden Lichtbündel durch den Einfluß der Korrekturlinse 31 fokussiert auf die Projektionsebene 7 abgebildet werden. Ferner leuchten sie in dieser Projektionsebene 7 vorgesehene Projektionsfläche vollständig aus. Vorteilhaft können die zu den zweiten Gruppen gehörenden Linsenelemente beider Linsenplatten in gleicher Weise ausgeführt sein, wie die zu den ersten Gruppen der Linsenelemente gehörenden Linsenelemente beider Platten. Da die durch diese Linsenelemente der ersten Gruppen geführten Lichtbündel nicht durch die Korrekturlinse 31 geführt werden, gelten für sie andere optische Verhältnisse, so daß diese in der Projektionsebene 7 unscharf abgebildet werden und nur einen Teil der Projektionsfläche beleuchten.

Es ist-grundsätzlich eine Umkehrung dieser optischen Verhältnisse möglich, wobei dann die Korrekturlinse 31 dazu eingesetzt wird, die durch die zweiten Linsenelemente geführten Lichtbündel unscharf auf der Projektionsebene 7 abzubilden.

In Fig. 6 ist eine vierte Ausführungsform der erfindungsgemäßen Lichtprojektionsanordnung dargestellt. Auch diese weist eine Lichtquelle 41 auf. Im Strahlengang hinter der Lichtquelle 41 ist eine Kondensorlinse 42 vorgesehen, hinter der wiederum eine erste Linsenplatte 43 angeordnet ist. Hinter der ersten Linsenplatte 43 fällt das Licht auf einen polarisierenden Strahlenteiler 44, dem im Strahlengang wiederum eine zweite Linsenplatte 45 nachgeschaltet ist. Hinter der zweiten Linsenplatte 45 fällt das Licht auf eine Projektionsebene 46. Polarisierende Strahlteiler dienen der verlustfreien Polarisation des Lichtes der Lampe und sind z.B. beschrieben in den Patenten WO95/33222 oder US 5295018.

In dieser Ausführungsform sind die zu den beiden Gruppen gehörenden Linsenelemente auf der ersten Linsenplatte 43 und auf der zweiten Linsenplatte 45 jeweils gleich ausgestaltet, d.h. die Linsenelemente auf der ersten Linsenplatte 43 sind untereinander etwa gleich, ebenso wie die Linsenelemente auf der zweiten Linsenplatte 45. Die unterschiedlichen optischen Verhältnisse für die Strahlenbündel, die durch Linsenelemente der ersten Gruppen und die durch Linsenelemente der zweite Gruppe geführt werden, werden durch den polarisierenden Strahlenteiler 44 erzielt.

Licht, das in einer ersten Polarisationsebene auf diesen Strahlenteiler 44 fällt, wird durch eine Reflexionsanordnung 47 innerhalb dieses Strahlenteilers reflektiert und durch weitere Reflektoren 48 nochmals reflektiert, so daß das Licht über diesen Umweg auf die zweite Linsenplatte 45 trifft. Es trifft dort auf zu der zweiten Gruppe gehörende Linsenelemente. Die Anordnung zur vollständigen Polarisation des Lichtbündels sieht eine Drehung der Polarisationsebene dieses Lichtes um 90° durch eine λ/2-Platte vor. Diese kann im optischen Weg vor oder hinter der-zweiten Linsenplatte angeordnet werden.

In einer zweiten Polarisationsebene auf den polarisierenden Strahlenteiler 44 fallendes Licht wird durch die Reflektoren 47 jedoch nicht reflektiert, sondern passiert diese. Damit fällt das Licht auf sehr viel kürzerem optischen Wege auf zu der ersten Gruppe gehörende Linsenelemente der zweiten Linsenplatte 45.

Damit sind für die Lichtbündel, die durch zu der ersten Gruppe gehörende Linsenelemente der zweiten Linsenplatte 45 geführt werden, deutlich andere optische Verhältnisse als für diejenigen Lichtbündel, die durch zweite Linsenelemente der Linsenplatte 45 geführt werden.

Diese differierenden optischen Verhältnisse werden dazu eingesetzt, die Lichtbündel, die durch die Linsenelemente der ersten Gruppe der zweiten Linsenplatte 45 geführt werden, scharf auf die Projektionsebene 46 abzubilden und eine in dieser vorgesehene in der Figur nicht näher dargestellte Projektionsfläche vollständig auszuleuchten. Die auf einem optisch deutlich längeren Weg geführten Lichtbündel, die durch zu der zweiten Gruppe gehörende Linsenelemente der zweiten Linsenplatte 45 geführt werden, werden unscharf auf der Projektionsebene 46 abgebildet und beleuchten eine in dieser vorgesehene Projektionsfläche nur teilweise.

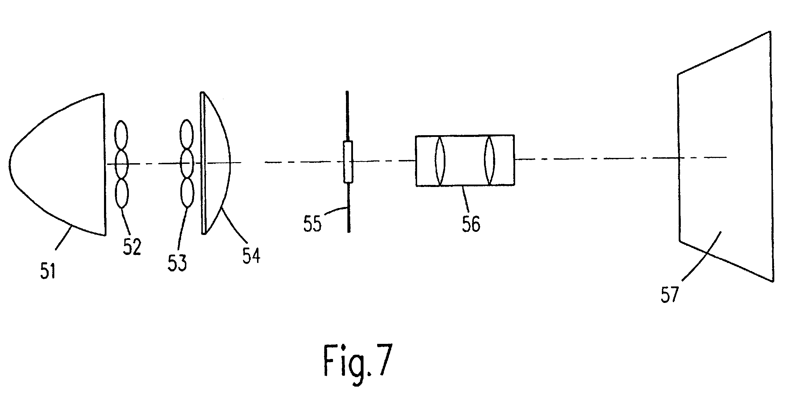

In Fig. 7 ist ein Videoprojektor dargestellt, für den die erfindungsgemäße Lichtprojektionsanordnung vorteilhaft eingesetzt werden kann. In der Darstellung gemäß Fig. 7 sind die Lichtquelle 51, die erste Linsenplatte 52, die zweite Linsenplatte 53 und eine Kondensorlinse 54 schematisch dargestellt. Diese Elemente können entsprechend einer der vier Ausführungsformen gemäß Fig. 3 bis 6 ausgestaltet sein. In der Darstellung gemäß Fig. 7 sind diese Elemente nur schematisch angedeutet und nicht näher ausgeführt.

Entsprechend einer der Ausgestaltungsformen wird erfindungsgemäß auf eine in Fig. 7 dargestellte Projektionsebene nur ein Teil der Lichtbündel scharf abgebildet, das eine in der Projektionsebene 55 vorgesehene Projektionsfläche vollständig beleuchtet. Ein anderer Teil der Lichtbündel wird auf diese Ebene unscharf abgebildet und beleuchtet die Fläche nur teilweise.

In dem Videoprojektor in der Darstellung gemäß Fig. 7 wird diese Projektionsebene bzw. Projektionsfläche durch ein LCD (Liquid Crystal Display)-Element realisiert.

Das auf diese LCD-Element 55 fallende Licht wird in Abhängigkeit eines in der Fig. 7 nicht angedeuteten Bildsignals, das einzelne Bildpunkte der LCD ansteuert, so moduliert, daß hinter dem LCD-Element 55 mittels eines Projektionsobjektivs 56 auf einen Bildprojektionsbildschirm 57 abgebildet wird.

Für einen derartigen Videoprojektor kann die erfindungsgemäße Lichtprojektionsanordnung vorteilhaft in der Weise genutzt werden, daß der Mittenbereich des LCD-Elementes 55 und damit der Mittenbereich des Bildprojektionsschirms 57 intensiver ausgeleuchtet wird als deren Randbereiche. Damit wird in der Mitte eine hohe Lichtintensität erzielt.

## Patentansprüche

1. Lichtprojektionsanordnung mit einer Lichtquelle (1; 41;51) und einem Linsenplattenintegrator (8), der eine im optischen Weg zwischen der Lichtquelle (1; 41;51) und einer Projektionsebene (7;46;55) angeordnete, eine vorgebbare Anzahl von Linsenelementen aufweisende erste Linsenplatte (2;11;21; 43;52) und eine im optischen Weg zwischen der ersten Linsenplatte (2;11;21;43;52) und der Projektionsebene *(7;46;55)* angeordnete, eine vorgebbare Anzahl von Linsenelementen aufweisende zweite Linsenplatte (4;22;45;53) aufweist, wobei das Licht der Lichtquelle (1;41;51) mittels der Linsenelemente der ersten Linsenplatte (2;11;21;43;52) auf den Linsenelementen der ersten Linsenplatte (2;11;21; 43;52) jeweils zugeordnete Linsenelemente der zweiten Linsenplatte (4;22;45;53) abgebildet wird und wobei eine Überlagerung der Lichtbündel der Linsenelemente der zweiten Linsenplatte (4;22;45; 53) auf der Projektionsebene (7;46;55) mittels einer prismatischen Anordnung der Linsenelemente der zweiten Linsenplatte (4;22;45;53) oder einer Kondensorlinse (6;42;54) erzielt wird, **dadurch gekennzeichnet, daß** eine erste Gruppe von Linsenelementen (12;23) der ersten Linsenplatte (2;11;21; 43;52) und eine erste Gruppe von diesen jeweils zugeordneten Linsenelementen (24) der zweiten Linsenplatte (4;22;45;53) vorgesehen sind, wobei die durch die Linsenelemente (12;23;24) der ersten Gruppen geführten Lichtbündel auf eine Projektionsfläche (9) in der Projektionsebene (7;46;55) fokussiert sind und diese jeweils ausleuchten, und daß eine zweite Gruppe von Linsenelementen (13; 25) der ersten Linsenplatte (2;11;21;43;52) und eine zweite Gruppe von diesen jeweils zugeordneten Linsenelementen (26) der zweiten Linsenplatte (4; 22;45;53) vorgesehen sind, wobei die durch die Linsenelemente (13;25;26) der zweiten Gruppen geführten Lichtbündel auf eine Ebene vor oder hinter der Projektionsebene (7;46;55) fokussiert sind und jeweils nur eine Teilfläche der Projektionsfläche (9) beleuchten.

2. Lichtprojektionsanordnung nach Anspruch 1, **dadurch gekennzeichnet, daß** die Teilfläche, die durch Lichtbündel beleuchtet wird, die durch die zweiten Gruppen der Linsenelemente (13;23;24) der ersten (2;11;21;43;52) und der zweiten (4;22; 45;53) Linsenplatte geführt werden, in einem Mittenbereich der Projektionsfläche (9) angeordnet ist.

3. Lichtprojektionsanordnung nach einem der Ansprüche 1 oder 2, **dadurch gekennzeichnet,** **daß** die Linsenelemente (13;25;26) der ersten und zweiten Gruppen das gleiche Seiten-/Höhenverhältnis wie die Projektionsfläche (9) aufweisen.

4. Lichtprojektionsanordnung nach einem der Ansprüche 1 bis 3, **dadurch gekennzeichnet,** **daß** die zu der zweiten Gruppe gehörenden Linsenelemente (13) der ersten Linsenplatte (11) kleiner ausgeführt sind als die zu der ersten Gruppe gehörenden Linsenelemente (12) der ersten Linsenplatte (11).

5. Lichtprojektionsanordnung nach Anspruch 4, **dadurch gekennzeichnet,** **daß** wenigstens einige der Linsenelemente (13) der zweiten Gruppe der ersten Linsenplatte (11) an deren äußerem Bereich angeordnet sind.

6. Lichtprojektionsanordnung nach einem der Ansprüche 1 bis 3, **dadurch gekennzeichnet,** **daß** die zu der ersten Gruppe gehörenden Linsenelemente (23) der ersten Linsenplatte (21) und die ihnen zugeordneten Linsenelemente der zweiten Linsenplatte (24) einen anderen Abstand zueinander aufweisen als die zu der zweiten Gruppe gehörenden Linsenelemente (25) der ersten Linsenplatte (21) und die ihnen zugeordneten Linsenelemente (26) der zweiten Linsenplatte (22).

7. Lichtprojektionsanordnung nach einem der Ansprüche 1 bis 3, **dadurch gekennzeichnet,** **daß** im Strahlengang zwischen der zweiten Linsenplatte (4) und der Projektionsebene (7) eine Korrekturlinse (31) angeordnet ist, durch welche der Maßstab der durch sie fallenden Strahlenbündel, die aus zu den ersten Gruppen gehörenden Linsenelementen stammen, so verändert wird, daß diese auf die Projektionsebene (7) fokussiert sind und diese jeweils vollständig ausleuchten, und daß die nicht die Korrekturlinse passierenden Lichtbündel aus Linsenelementen der zweiten Gruppen auf eine Ebene vor oder hinter der Projektionsbene (7) fokussiert sind und diese jeweils nur teilweise beleuchten.

8. Lichtprojektionsanordnung nach einem der Ansprüche 1 bis 3, **dadurch gekennzeichnet,** **daß** ein polarisierender Strahlenteiler (44) im Strahlengang vorgesehen ist, welcher verschieden lange optische Wege für in verschieden Polarisationsebenen auf ihn treffende Lichtstrahlen aufweist, und daß der Strahlenteiler (44) das auf ihn treffende Licht in Lichtbündel, die auf auf der zweiten Linsenplatte (4) vorgesehene Linsenelemente der ersten Gruppe geführt werden, und in Lichtbündel, die auf auf der zweiten Linsenplatte (4) vorgesehene Linsenelemente der zweiten Gruppe geführt werden, aufteilt.

9. Lichtprojektionsanordnung nach einem der Ansprüche 1 bis 8, **dadurch gekennzeichnet,** **daß** etwa 20 bis 50 % der Linsenelemente der Linsenplatten (2;11;21;43;52;4;22;45;53) jeweils der zweiten Gruppe angehören.

10. Videoprojektor mit einer Lichtprojektionsanordnung nach einem der Ansprüche 1 bis 9, **dadurch gekennzeichnet,** **daß** die Projektionsebene als LCD-Element (55) ausgebildet ist, das in Abhängigkeit eines Bildsignals angesteuert wird, und daß im Strahlengang hinter dem LCD-Element (55) wenigstens ein Projektionsobjektiv (56) vorgesehen ist.

**Claims**

1. An optical projection device comprising a light source (1; 41; 51) and a lens plate integrator (8) which comprises a first lens plate (2; 11; 21; 43; 52) having a predeterminable number of lens elements and arranged in the optical path between the light source (1; 41; 51) and a projection plane (7; 46; 55), and a second lens plate (4; 22; 45; 53) having a predeterminable number of lens elements and arranged in the optical path between the first lens plate (2; 11; 21; 43; 52) and the projection plane (7; 46; 55), the light from the light source (1; 41; 51) being imaged by means of the lens elements of the first lens plate (2; 11; 21; 43; 52) on the lens elements of the second lens plate (4; 22; 45; 53) associated with the lens elements of the first lens plate (2; 11; 21; 43; 52), and the light beams of the lens elements of the second lens plate (4; 22; 45; 53) being superimposed on the projection plane (7; 46; 55) by means of a prismatic arrangement of the lens elements of the second lens plate (4; 22; 45; 53) or by means of a condensor lens (6; 42; 54), **characterized in that** a first group of lens elements (12; 23) of the first lens plate (2; 11; 21; 43; 52) and a first group of associated lens elements (24) of the second lens plate (4; 22; 45; 53) are provided, the light beams passed through the lens elements (12; 23; 24) of the first group being focused on, and illuminating, a projection face (9) in the projection plane (7; 46; 55), and **in that** a second group of lens elements (13; 25) of the first lens plate (2; 11; 21; 43; 52) and a second group of associated lens elements (26) of the second lens plate (4; 22; 45; 53) are provided, the light beams passed through the lens elements (13; 25; 26) of the second group being focused on a plane in front of or behind the projection plane (7; 46; 55) and illuminating only a part of the projection face (9).

2. An optical projection device as claimed in claim 1, **characterized in that** the partial face, which is illuminated by light beams passed through the second groups of lens elements (13; 23; 24) of the first lens plate (2; 11; 21; 43; 52) and the second lens plate (4; 22; 45; 53), is arranged in a center area of the projection face (9).

3. An optical projection device as claimed in claim 1 or 2, **characterized in that** the lens elements (13; 25; 26) of the first and second groups have the same aspect ratio as the projection face (9).

4. An optical projection device as claimed in any one of claims 1 to 3, **characterized in that** the lens elements (13) of the first lens plate (11) of the second group are smaller than the lens elements (12) of the first lens plate (11) of the first group.

5. An optical projection device as claimed in claim 4, **characterized in that** at least some of the lens elements (13) on the first lens plate (11) of the second group are arranged at the outer area.

6. An optical projection device as claimed in any one of claims 1 to 3, **characterized in that** the lens elements (23) on the first lens plate (21) of the first group and the associated lens elements on the second lens plate (24) have a different distance relative to one another than the lens elements (25) on the first lens plate (21) of the second group and the associated lens elements (26) on the second lens plate (22).

7. An optical projection device as claimed in any one of claims 1 to 3, **characterized in that** the radiation path between the second lens plate (4) and the projection plane (7) incorporates a correction lens (31) which changes the scale of the light beams passing through this lens and originating from the lens elements of the first groups in such a way that they are focused on the projection plane (7) and illuminate said plane completely, and **in that** the light beams not passing through the correction lens and originating from lens elements of the second groups are focused on a plane in front of or behind the projection plane (7) and illuminate said plane only partially.

8. An optical projection device as claimed in any one of claims 1 to 3, **characterized in that** a polarizing beam splitter (44) is arranged in the radiation path, having optical paths of different lengths for light rays incident thereon in different planes of polarization, and **in that** the beam splitter (44) splits the light incident thereon into light beams sent to lens elements on the second lens plate (4) of the first group and into light beams sent to lens elements on the second lens plate (4) of the second group.

9. An optical projection device as claimed in any one of claims 1 to 8, **characterized in that** approximately 20 to 50% of the lens elements of the lens plates (2; 11; 21; 43; 52; 4; 22; 45; 53) are associated with the second group.

10. A video projector including an optical projection device as claimed in any one of claims 1 to 9, **characterized in that** the projection plane is implemented as an LCD element (55) which is driven in dependence on a picture signal, and **in that** at least a projection objective (56) is arranged in the radiation path behind the LCD element (55).

**Revendications**

1. Projecteur à lumière avec une source lumineuse (1; 41; 51) et un intégrateur en forme de matrice de lentilles (8) qui comporte une première matrice de lentilles (2;11;21;43;52) disposée dans le trajet optique entre la source lumineuse (1;41;51) et un plan de projection (7;46;55) et présentant un nombre à déterminer préalablement d'éléments de lentille et une deuxième matrice de lentilles (4;22;45;53) disposée dans le trajet optique entre la première matrice de lentilles (2;11;21;43;52) et le plan de projection (7;46;55) et présentant un nombre à déterminer préalablement d'éléments de lentille, la lumière de la source lumineuse (1;41;51) étant représentée à l'aide des éléments de lentille de la première matrice de lentilles (2;11;21;43;52) sur les éléments de lentille de la deuxième matrice de lentilles (4;22;45;

53) respectivement attribués aux éléments de lentille de la première matrice de lentilles (2;11;21;43;52) et une superposition des faisceaux lumineux des éléments de lentille de la deuxième matrice de lentilles (4;22;45;53) sur le plan de projection (7;46;55) étant atteinte à l'aide d'un agencement prismatique des éléments de lentille de la deuxième matrice de lentilles (4;22;45;53) ou d'une lentille de condenseur (6;42;54),

**caractérisé en ce**

**qu'**un premier groupe d'éléments de lentille (12;23) de la première matrice de lentilles (2;11;21;43;52) et un premier groupe d'éléments de lentille respectivement affectés à ceux-ci de la deuxième matrice de lentilles (4;22;45;53) sont prévus, les faisceaux lumineux amenés par les éléments-de lentille (12;23;24) des premiers groupes étant focalisés sur une surface de projection (9) dans le plan de projection (7;46;55) et éclairant respectivement celle-ci et qu'un deuxième groupe d'éléments de lentille (13;25) de la première matrice de lentilles (2;11;21;43;52) et un deuxième groupe de ces éléments de lentille (26) respectivement attribués à ceux-ci de la deuxième matrice de lentille (4;22;45;53) sont prévus, les faisceaux lumineux dirigés par les éléments de lentille (13;25;26) des deuxièmes groupes étant focalisés sur un plan devant ou derrière le plan de projection (7;46;55) et n'exposant respectivement qu'une surface partielle de la surface de projection (9).

2.  Projecteur à lumière selon la revendication 1, **caractérisé en ce que** la surface partielle qui est exposée par les faisceaux lumineux qui sont dirigés par les deuxièmes groupes des éléments de lentille (13;23;24) des première (2;11;21;43;52) et deuxième (4;22;45;53) matrices de lentilles est disposée dans une zone centrale de la surface de projection (9).

3.  Projecteur à lumière selon l'une des revendications 1 ou 2, **caractérisé en ce que** les éléments de lentille (13;25;26) des premier et deuxième groupes présentent le même rapport côtés/hauteur que la surface de projection (9).

4.  Projecteur à lumière selon l'une des revendications 1 à 3, **caractérisé en ce que** les éléments de lentille (13) appartenant au deuxième groupe de la première matrice de lentilles (11) sont plus petits que les éléments de lentille (12) appartenant au premier groupe de la première matrice de lentilles (11).

5.  Projecteur à lumière selon la revendication 4, **caractérisé en ce qu'**au moins quelques-uns des éléments de lentille (13) du deuxième groupe de la première matrice de lentilles (11) sont disposés sur sa zone extérieure.

6.  Projecteur à lumière selon l'une des revendications 1 à 3, **caractérisé en ce que** les éléments de lentille (23) appartenant au premier groupe de la première matrice de lentilles (21) et les éléments de lentille qui leur sont attribués de la deuxième matrice de lentilles (24) présentent un autre intervalle réciproque que les éléments de lentille (25) appartenant au deuxième groupe de la première matrice de lentilles (21) et les éléments de lentille (26) qui leur sont attribués de la deuxième matrice de lentilles (22).

7.  Projecteur à lumière selon l'une des revendications 1 à 3, **caractérisé en ce qu'**il est disposé entre la deuxième matrice de lentilles (4) et le plan de projection (7) une lentille de correction (31) par laquelle l'échelle des faisceaux de rayons qui la traversent et proviennent des éléments de lentille appartenant aux premiers groupes est modifiée de telle sorte que ceux-ci soient focalisés sur le plan de projection (7) et éclairent celui-ci complètement et que les faisceaux lumineux des éléments de lentille des deuxièmes groupes qui ne traversent pas la lentille de correction sont focalisés sur un plan devant ou derrière le plan de projection (7) et ne l'éclairent respectivement qu'en partie.

8.  Projecteur à lumière selon l'une des revendications 1 à 3, **caractérisé en ce qu'**un fractionneur de rayons polarisant (44) est prévu dans le trajet des rayons qui présente des courses optiques de longueur différente pour des rayons lumineux appliqués sur lui dans des plans de polarisation différents et que le fractionneur de rayons (44) fractionne la lumière appliquée sur lui en faisceaux lumineux qui sont dirigés sur les éléments de lentille du premier groupe prévus sur la deuxième matrice de lentilles (4) et en faisceaux lumineux qui sont dirigés sur les éléments de lentille du deuxième groupe prévus sur la deuxième matrice de lentilles (4).

9.  Projecteur à lumière selon l'une des revendications 1 à 8, **caractérisé en ce qu'**environ 20 à 50% des éléments de lentille des matrices de lentille (2;11;21;43;52;4;22;45;53) appartiennent respectivement au deuxième groupe.

10. Vidéoprojecteur avec un projecteur à lumière selon l'une des revendications 1 à 9, **caractérisé en ce que** le plan de projection est conçu comme un élément LCD (55) qui est excité en fonction d'un signal d'image et qu'au moins un objectif de projection (56) est prévu dans le trajet des rayons derrière l'élément LCD (55).

Fig.1

Fig.2

Fig.3

Fig.4

Fig.5

Fig.6

Fig.7